# EUROPÄISCHE PATENTSCHRIFT

(11) **EP 4 163 174 B1**
(45) Veröffentlichungstag und Bekanntmachung des Hinweises auf die Patenterteilung: **18.06.2025**
(21) Anmeldenummer: 22197885.1
(22) Anmeldetag: 26.09.2022
(51) Int. Cl.: B60W 30/12, B60W 50/14, B60W 50/08, B60W 60/00, B60W 40/04

(54) **VERFAHREN UND VORRICHTUNG ZUR MINDESTENS ASSISTIERTEN QUERFÜHRUNG EINES KRAFTFAHRZEUGS**
METHOD AND DEVICE FOR THE AT LEAST ASSISTED LATERAL GUIDANCE OF A MOTOR VEHICLE
PROCÉDÉ ET DISPOSITIF D'AU MOINS GUIDAGE TRANSVERSAL ASSISTÉ D' UN VÉHICULE AUTOMOBILE

(30) Priorität: 08.10.2021 DE 102021211358
(43) Veröffentlichungstag der Anmeldung: 12.04.2023
(73) Patentinhaber: VOLKSWAGEN AG, 38440 Wolfsburg (DE)
(72) Erfinder: Münning, Daniel, 38124 Braunschweig (DE); Detering, Stefan, 38110 Braunschweig (DE)

(56) Entgegenhaltungen:
- DE-A1- 102015 207 024
- DE-A1- 102016 220 647
- DE-A1- 102019 206 748
- DE-A1- 102019 213 185
- DE-A1- 102020 202 964

## Beschreibung

Die Erfindung betrifft ein Verfahren und eine Vorrichtung zur mindestens assistierten Querführung eines Kraftfahrzeugs.

Aus der DE 10 2018 207 869 A1 ist ein Verfahren zur Bereitstellung einer Automatisierungsfunktion für ein Fahrzeug bekannt, bei dem Umfelddaten erfasst werden, wobei in Abhängigkeit von den erfassten Umfelddaten die Automatisierungsfunktion aktiviert und ein Qualitätsmaß bestimmt wird. Dabei wird anhand des Qualitätsmaßes eine Qualitätsstufe auf einer mehrstufigen Skala bestimmt und eine grafische Ausgabe erzeugt und ausgegeben, wobei die Ausgabe ein Qualitätsanzeigeelement umfasst, das in Abhängigkeit von dem Qualitätsmaß gebildet wird. Dabei können die Umfelddaten mittels Umfeldsensoren des Fahrzeugs erfasst und/oder über eine datentechnische Verbindung empfangen werden. Die Umfelddaten betreffen vorzugsweise einen Fahrstreifen, eine Fahrbahnmarkierung, einen Fahrbahnrand, ein Verkehrsschild und/oder ein weiteres Fahrzeug in der Umgebung des Fahrzeugs. Durch die Automatisierungsfunktion wird eine zumindest teilweise autonome Querführung und/oder Längsführung des Fahrzeugs ausgeführt.

Aus der DE 10 2015 000 379 A1 ist ein Verfahren zum Unterstützen einer Zielfahrerassistenzeinrichtung eines Zielfahrzeugs auf einem durch die Zielfahrerassistenzeinrichtung nicht vermessbaren Streckenabschnitt bekannt. Dabei wird ein Warnsignal von einer Fremdfahrerassistenzeinrichtung mindestens eines Fremdfahrzeugs empfangen, das eine Nichtvermessbarkeit des Streckenabschnitts durch einen autonomen oder teilautonomen Betriebsmodus des Fremdkraftfahrzeugs beschreibt. Weiter wird ein Referenzsignal von dem mindestens einen Fremdfahrzeug empfangen, das eine aktuelle geografische Position und eine aktuelle Fahrtrichtung des mindestens einen Fremdfahrzeugs beschreibt. Anhand des Referenzsignals kennzeichnet das Zielfahrzeug den Streckenabschnitt als nicht vermessbar. Das Fremdfahrzeug empfängt dann ein Anfragesignal von der Zielfahrerassistenzeinrichtung, wobei das Anfragesignal eine geografische Position des Zielfahrzeuges aufweist sowie gegebenenfalls Fahrtrichtung und/oder Fahrtroute. In Abhängigkeit von dem Anfragesignal wird ermittelt, ob sich das Zielfahrzeug in einer vorbestimmten Umgebung des gekennzeichneten Streckenabschnitts befindet. Falls dies zutrifft, wird eine Betriebsstrategie durch eine externe Steuereinheit für das Zielfahrzeug ermittelt, Steuersignale erzeugt und an das Zielfahrzeug übertragen, wo dann die Betriebsstrategie umgesetzt wird.

Aus der DE 10 2019 213 185 A1 ist ein Verfahren zur Querführung eines Fahrzeugs mit den folgenden Verfahrensschritten bekannt:
- Erfassen von Umgebungsdaten eines Fahrzeugs beim Befahren einer Strecke;
- Erhalten von gespeicherten Umgebungsdaten, die von einer Mehrzahl von anderen Fahrzeugen, die die Strecke aktuell nicht befahren, beim Befahren der Strecke erfasst wurden,
- Plausibilisieren der gespeicherten Umgebungsdaten anhand der erfassten Umgebungsdaten und
- Durchführen einer Querführung des Fahrzeugs basierend auf den plausibilisierten Umgebungsdaten.

Dabei sind die gespeicherten Umgebungsdaten vorzugsweise Schwarmdaten. Weiter ist vorzugsweise vorgesehen, dass dann, wenn das Plausibilisieren misslingt, die vom Fahrzeug erfassten Umgebungsdaten als Umgebungsdaten für die Querführung berücksichtigt werden.

Aus der DE 10 2020 202 964 A1 ist ein Verfahren zur Erhöhung der Sicherheit von Fahrfunktionen in einem teilautomatisierten oder vollautonomen Fahrzeug mit folgenden Schritten bekannt:
- Aufnehmen eines Umgebungsbildes oder einer Folge an Umgebungsbildern mittels zumindest eines Umfeldsensors,
- Detektieren von Fahrspurbegrenzungen in dem Umgebungsbild oder der Folge von Umgebungsbildern,
- Ermitteln eines Fahrspurverlaufs basierend auf den detektierten Fahrspurbegrenzungen,
- Abrufen eines weiteren Fahrspurverlaufs aus einer Datenquelle,
- Plausibilisieren des ermittelten Fahrspurverlaufs durch Überprüfen einer Übereinstimmung der Fahrspurverläufe,
- Feststellen eines Grades der Übereinstimmung,
- Festlegen eines Konfidenzwertes basierend auf dem Grad der Übereinstimmung und
- Festlegen, ob der ermittelte Fahrspurverlauf einer Fahrfunktion bereitgestellt wird.

Aus der DE 10 2019 206 748 A1 ist ein Verfahren zum Bereitstellen von Umfeldinformationen bekannt, wobei mindestens einem Assistenzsystem mindestens eines Verkehrsteilnehmers mittels eines zentralen Sensors auf Grundlage einer Karte positionsabhängige Umfeldinformationen bereitgestellt werden, die jeweils mit mindestens einem Zeitstempel versehen sind, der eine letzte Aktualisierung und/oder Überprüfung der bereitgestellten positionsabhängigen Umfeldinformationen markiert.

Der Erfindung liegt das technische Problem zugrunde, ein Verfahren zur mindestens assistierten Querführung eines Kraftfahrzeugs zur Verfügung zu stellen, das eine erhöhte Verfügbarkeit ermöglicht. Ein weiteres technisches Problem ist die Schaffung einer geeigneten Vorrichtung.

Die Lösung des technischen Problems ergibt sich durch ein Verfahren mit den Merkmalen des Anspruchs 1 sowie eine Vorrichtung mit den Merkmalen des Anspruchs 4. Weitere vorteilhafte Ausgestaltungen der Erfindung ergeben sich aus den Unteransprüchen.

Das Verfahren zur mindestens assistierten Querführung eines Kraftfahrzeugs erfolgt mittels mindestens einer Kamera, einer Auswerte- und Steuereinheit und einer Aktorik zur Umsetzung von Lenkeingriffen, wobei die Auswerte- und Steuereinheit aus den Daten der mindestens einen Kamera mindestens eine Fahrspur ermittelt und in Abhängigkeit der ermittelten Fahrspur Steuerbefehle für die Aktorik erzeugt. Dabei berücksichtigt die Auswerte- und Steuereinheit zusätzlich Schwarmdaten, mittels derer die Daten der Kamera gestützt werden können. Die Schwarmdaten können beispielsweise in Form einer Schwarmkarte vorliegen und werden vorzugsweise vorab für vorausliegende Streckenabschnitte von einem Server oder aus einer Cloud heruntergeladen. Die Stützung kann dabei in einem einfachen Verifizieren bzw. Plausibilisieren liegen. In Fahrsituationen, in denen eine unzureichende Fahrspurerkennung mittels der Daten der Kamera vorliegt oder zu erwarten ist, erfolgt dann die Querführung mittels der Schwarmdaten, wenn die Schwarmdaten zuvor ein vorgegebenes Vertrauensmaß überschritten haben. Im Extremfall erfolgt dabei die Querführung ausschließlich aus den Schwarmdaten. Hierdurch wird die Verfügbarkeit der Querführung erhöht. Dabei kann die Querführung auch voll automatisiert sein, d.h. die komplette Querführung erfolgt durch die Auswerte- und Steuereinheit bzw. die Aktorik. Typische Fahrsituationen, wo eine unzureichende Fahrspurerkennung mittels Kamera auftreten kann, sind Autobahnabfahrten oder Autobahn-Ohren. Der Grund liegt in häufig vorkommenden Steigungen oder Gefällen sowie Verdeckungen oder gar fehlenden Markierungen. Eine derartige Fahrsituation kann nun erkannt oder erwartet werden, weil beispielsweise aus den Navigationsdaten bekannt ist, dass eine Autobahnausfahrt befahren werden soll. Zusätzlich oder alternativ kann dies durch das Fahren auf einer Verzögerungsspur durchgeführt werden. Sind dann die Schwarmdaten über einem vorgegebenen Vertrauensmaß, so kann mit diesen die Querführung aufrechterhalten werden. Das Vertrauensmaß ist dabei auch ein Maß für die Qualität der Schwarmdaten. Dabei kann das Vertrauensmaß binär sein (vertrauenswürdig oder nicht vertrauenswürdig) oder aber mehrstufig ausgebildet sein.

Dabei wird das Vertrauensmaß der Schwarmdaten durch mindestens einen Vergleich der Schwarmdaten mit den Daten der mindestens einen Kamera bestimmt. Der Vorteil ist, dass die Daten der mindestens einen Kamera im Regelfall sehr zuverlässig und genau sind. Dabei kann die Bestimmung periodisch durchgeführt werden oder aber situativ (beispielsweise 1 km oder eine andere vorab bestimmte Strecke vor einer geplanten Abfahrt von der Autobahn).

Weiter werden jeweils eine Kurve für eine Fahrspurabgrenzung anhand der Daten der mindestens einen Kamera und der Schwarmdaten für eine vorbestimmte Strecke bestimmt, wobei betragsmäßig die Fläche zwischen den Kurven bestimmt und mit einem Schwellwert verglichen wird. Betragsmäßig meint dabei, dass sowohl Flächen berücksichtigt werden, wenn die Kurve für die Schwarmdaten links zu der Kurve aus den Daten der Kamera liegt, als auch, wenn diese rechts zu der Kurve liegt. Alle Flächen werden addiert. Neben der Fahrspurbegrenzung kann alternativ auch eine Kurve für eine Fahrspurmitte ermittelt und verglichen werden. Zusätzlich wird ein maximaler Abstand zwischen den beiden Kurven entlang der Strecke ermittelt, wobei der maximale Abstand mit einem Schwellwert verglichen wird. Ist dieser maximale Abstand größer als der Schwellwert (z.B. 80 cm), so kann nicht ausgeschlossen werden, dass eine solche Abweichung auch in Daten im Bereich der Autobahnabfahrt oder einer ähnlichen Verkehrssituation vorliegt, die zwar gegebenenfalls nur singulär ist, aber dennoch kritisch sein könnte.

In einer Ausführungsform wird eine Übernahme-Aufforderung für den Kraftfahrzeugführer generiert, wenn die Schwarmdaten das vorgegebene Vertrauensmaß unterschritten haben. Die Übernahme-Aufforderung kann dabei akustisch, haptisch und/oder visuell erfolgen. Vorzugsweise ist die Übernahme-Aufforderung mindestens akustisch.

In einer weiteren Ausführungsform wird ein Halten bzw. Greifen einer Lenkhandhabe erfasst, wobei ein Warnsignal generiert wird, wenn die Querführung mittels der Schwarmdaten erfolgt und kein Umgreifen der Lenkhandhabe detektiert wurde. Die Erfassung des Haltens der Lenkhandhabe kann dabei z.B. mittels einer kapazitiven oder drucksensitiven Sensorik in der Lenkhandhabe und/oder mittels einer Fahrzeuginsassenkamera erfolgen. Die Grundüberlegung dabei ist, dass es bei einer Querführung anhand der Schwarmdaten Situationen geben kann, wo der Kraftfahrzeugführer doch manuell eingreifen muss. Wird nun erfasst, dass der Kraftfahrzeugführer seine Hände gar nicht an der Lenkhandhabe hat und diese nur leicht auf der Lenkhandhabe abstützt, so wird dieser durch das Warnsignal auf den Umstand aufmerksam gemacht, eventuell sehr schnell die Querführung übernehmen zu müssen, sodass eine Reaktionszeit des Kraftfahrzeugführers verkürzt wird.

Hinsichtlich der vorrichtungsmäßigen Ausgestaltung wird vollinhaltlich auf die vorangegangenen Ausführungen Bezug genommen.

Die Erfindung wird nachfolgend anhand eines bevorzugten Ausführungsbeispiels näher erläutert. Die Figuren zeigen:
- Fig. 1: ein schematisches Blockschaltbild einer Vorrichtung zur mindestens assistierten Querführung eines Kraftfahrzeugs und
- Fig. 2: zwei Kurven einer Fahrspurbegrenzung mittels der Daten mindestens einer Kamera und Schwarmdaten.

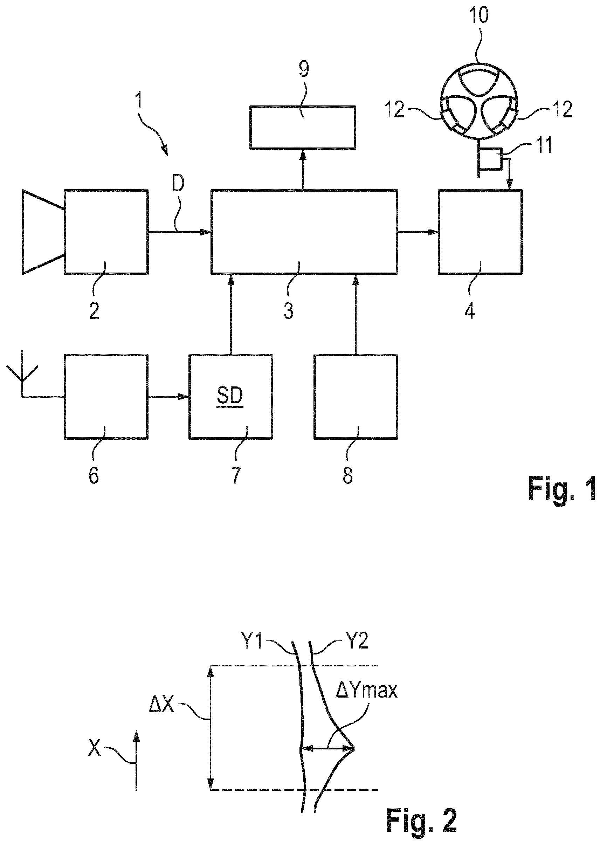

In der Fig. 1 ist stark vereinfacht eine Vorrichtung 1 zur mindestens assistierten Querführung eines Kraftfahrzeugs dargestellt, wobei vorzugsweise mittels der Vorrichtung auch eine vollautomatisierte Querführung möglich ist. Die Vorrichtung 1 weist mindestens eine Kamera 2, eine Auswerte- und Steuereinheit 3 und eine Aktorik 4 zur Umsetzung von Lenkeingriffen auf, wobei die Auswerte- und Steuereinheit 3 derart ausgebildet ist, aus den Daten D der mindestens einen Kamera 2 mindestens eine Fahrspur zu ermitteln und in Abhängigkeit der ermittelten Fahrspur Steuerbefehle für die Aktorik 4 zu erzeugen. Die Aktorik 4 ist dabei ein Lenksystem des Kraftfahrzeugs. Weiter weist die Vorrichtung 1 eine Empfangseinrichtung 6 auf, über die Schwarmdaten SD von einem externen Server oder einer Cloud empfangen und in einem Speicher 7 abgelegt werden können. Die Auswerte- und Steuereinheit 3 kann dabei auf die Schwarmdaten SD zugreifen. Weiter weist die Vorrichtung 1 eine Positionsermittlungseinheit 8 auf, die beispielsweise als satellitengestütztes Ortungssystem wie beispielsweise GPS ausgebildet ist. Die Auswerte- und Steuereinheit 3 kann dabei auch auf die Daten der Positionsermittlungseinheit 8 zugreifen, um so beispielsweise die Schwarmdaten SD zu verorten. Weiter weist die Vorrichtung 1 Ausgabemittel 9 auf, mittels derer ein Kraftfahrzeugführer visuell und/oder akustisch und/oder haptisch gewarnt oder informiert werden kann. Schließlich weist die Vorrichtung 1 eine Lenkhandhabe 10 in Form eines Lenkrads auf, wobei der Lenkhandhabe ein Drehwinkel- oder Drehmomentsensor 11 zugeordnet ist, dessen Signale der Aktorik 4 zugeführt werden, wenn der Kraftfahrzeugführer manuell lenkt. An der Lenkhandhabe 10 sind kapazitive Sensoren 12 angeordnet, mittels derer eine hands-on-Detektion durchgeführt werden kann. Es kann also erfasst werden, ob der Kraftfahrzeugführer die Lenkhandhabe umgreift oder nicht.

Die Daten der Sensoren 12 werden ebenfalls der Auswerte- und Steuereinheit 3 zugeführt.

Im Normalfall bzw. Regelbetrieb erfolgt eine automatisierte Querführung des Kraftfahrzeugs anhand der Daten der mindestens einen Kamera 2, deren Daten im Regelfall hochgenau sind. Die Schwarmdaten SD werden gegebenenfalls zur Stützung der Daten D herangezogen, was aber nicht zwingend ist. Erfasst nun die Auswerte- und Steuereinheit 3 eine Fahrsituation, in der eine unzureichende Fahrspurerkennung mittels der Daten der Kamera 2 zu erwarten ist (z.B. eine Autobahnabfahrt), so wird ein Vertrauensmaß für die Schwarmdaten SD überprüft. Die bevorstehende Autobahnabfahrt kann dabei beispielsweise aus Navigationsdaten einer berechneten Route oder aus einem Abbiegen auf eine Verzögerungsspur ermittelt werden.

Die Ermittlung und Überprüfung des Vertrauensmaßes der Schwarmdaten SD soll nun kurz anhand von Fig. 2 kurz erläutert werden. Hierzu ermittelt die Auswerte- und Steuereinheit 3 zunächst eine Fahrspurbegrenzung Y1 aus den Daten D der Kamera 2 sowie eine Fahrspurbegrenzung Y2 aus den Schwarmdaten SD. Dabei können sich die beiden Kurven Y1, Y2 auch schneiden. Die beiden Kurven Y1, Y2 werden nun über eine vorgegebene Strecke ΔX von beispielsweise 50 m - 100 m miteinander verglichen, wobei X in Fahrtrichtung orientiert ist. Der Vergleich besteht einerseits darin, die Fläche zwischen den beiden Kurven Y1, Y2 zu bestimmen und mit einem ersten Schwellwert S1 zu vergleichen. Ist die Fläche kleiner als der Schwellwert S1, spricht dies dafür, dass das Vertrauensmaß hoch ist. Zusätzlich wird aber auch der maximale Abstand ΔYₘₐₓ zwischen den beiden Kurven ermittelt und mit einem zweiten Schwellwert S2 verglichen. Die Schwarmdaten SD werden dann als vertrauenswürdig bewertet, wenn die Fläche kleiner dem ersten Schwellwert S1 und der maximale Abstand ΔYₘₐₓ kleiner als der zweite Schwellwert S2 ist (Vertrauensmaß ist größer einem Schwellwert). Sind die Schwarmdaten SD zuverlässig, so kann die vollautomatisierte Querführung auf Basis der Schwarmdaten SD durchgeführt werden. Allerdings wird der Kraftfahrzeugführer darüber informiert, da dieser gegebenenfalls doch die Querführung übernehmen muss bzw. gegebenenfalls eingreifen muss. Dabei kann die Information dringlicher erfolgen, wenn ermittelt wird, dass der Kraftfahrzeugführer aktuell nicht die Lenkhandhabe 10 umgreift.

Sind die Schwarmdaten SD hingegen nicht vertrauenswürdig, so wird der Kraftfahrzeugführer aufgefordert, die Querführung wieder zu übernehmen.

### Bezugszeichenliste

- 1: Vorrichtung
- 2: Kamera
- 3: Auswerte- und Steuereinheit
- 4: Aktorik
- 6: Empfangseinrichtung
- 7: Speicher
- 8: Positionsermittlungseinheit
- 9: Ausgabemittel
- 10: Lenkhandhabe
- 11: Drehmomentsensor
- 12: Sensor
- SD: Schwarmdaten
- D: Daten der Kamera
- S1, S2: Schwellwerte
- Y1, Y2: Kurven
- ΔX: Erstreckung
- ΔYₘₐₓ: maximaler Abstand

## Patentansprüche

1. Verfahren zur mindestens assistierten Querführung eines Kraftfahrzeugs, mittels mindestens einer Kamera (2), einer Auswerte- und Steuereinheit (3) und einer Aktorik (4) zur Umsetzung von Lenkeingriffen, wobei die Auswerte- und Steuereinheit (3) aus den Daten (D) der Kamera (2) mindestens eine Fahrspur ermittelt und in Abhängigkeit der ermittelten Fahrspur Steuerbefehle für die Aktorik (4) erzeugt, wobei die Auswerte- und Steuereinheit (3) zusätzlich Schwarmdaten (SD) berücksichtigt, wobei in Fahrsituationen, in denen eine unzureichende Fahrspurerkennung mittels der Daten (D) der Kamera (2) vorliegt oder zu erwarten ist, die Querführung mittels der Schwarmdaten (SD) erfolgt, wenn die Schwarmdaten (SD) zuvor ein vorgegebenes Vertrauensmaß überschritten haben, wobei das Vertrauensmaß der Schwarmdaten (SD) durch mindestens einen Vergleich der Schwarmdaten (SD) mit den Daten (D) der mindestens einen Kamera (2) bestimmt wird, wobei jeweils eine Kurve (Y1, Y2) für eine Fahrspurbegrenzung anhand der Daten (D) der mindestens einen Kamera (2) und der Schwarmdaten (SD) für eine vorgegebene Strecke (ΔX) bestimmt werden, wobei betragsmäßig die Fläche zwischen den Kurven (Y1, Y2) bestimmt wird und mit einem Schwellwert S1 verglichen wird und ein maximaler Abstand (ΔYₘₐₓ) zwischen den beiden Kurven (Y1, Y2) entlang der Strecke (ΔX) ermittelt wird, wobei der maximale Abstand (ΔYₘₐₓ) mit einem Schwellwert S2 verglichen wird.

2. Verfahren nach Anspruch 1, **dadurch gekennzeichnet, dass** eine Übernahme-Aufforderung für den Kraftfahrzeugführer generiert wird, wenn die Schwarmdaten (SD) das vorgegebene Vertrauensmaß unterschritten haben.

3. Verfahren nach Anspruch 1 oder 2, **dadurch gekennzeichnet, dass** ein Halten einer Lenkhandhabe (10) durch den Kraftfahrzeugführer erfasst wird, wobei ein Warnsignal generiert wird, wenn die Querführung mittels der Schwarmdaten (SD) erfolgt und kein Umgreifen der Lenkhandhabe (10) detektiert wurde.

4. Vorrichtung (1) zur mindestens assistierten Querführung eines Kraftfahrzeugs, umfassend mindestens eine Kamera (2), eine Auswerte- und Steuereinheit (3) und eine Aktorik (4) zur Umsetzung von Lenkeingriffen, wobei die Auswerte- und Steuereinheit (3) derart ausgebildet ist, aus den Daten (D) der mindestens einen Kamera (2) mindestens eine Fahrspur zu ermitteln und in Abhängigkeit der ermittelten Fahrspur Steuerbefehle für die Aktorik (4) zu erzeugen, wobei die Auswerte- und Steuereinheit (3) zusätzlich Schwarmdaten (SD) berücksichtigt, wobei die Auswerte- und Steuereinheit (3) weiter derart ausgebildet ist, in Fahrsituationen, in denen eine unzureichende Fahrspurerkennung mittels der Daten (D) der Kamera (2) vorliegt oder zu erwarten ist, die Querführung mittels der Schwarmdaten (SD) erfolgt, wenn die Schwarmdaten (SD) ein vorgegebenes Vertrauensmaß überschritten haben, wobei die Auswerte- und Steuereinheit (3) derart ausgebildet ist, das Vertrauensmaß der Schwarmdaten (SD) durch mindestens einen Vergleich der Schwarmdaten (SD) mit den Daten (D) der mindestens einen Kamera (2) zu bestimmen, wobei die Auswerte- und Steuereinheit (3) derart ausgebildet ist, dass jeweils eine Kurve (Y1, Y2) für eine Fahrspurbegrenzung anhand der Daten (D) der mindestens einen Kamera (2) und der Schwarmdaten (SD) für eine vorgegebene Strecke (ΔX) bestimmt werden, wobei betriebsmäßig die Fläche zwischen den Kurven (Y1, Y2) bestimmt wird und mit einem Schwellwert S1 verglichen wird und ein maximaler Abstand (ΔYₘₐₓ) zwischen den beiden Kurven (Y1, Y2) entlang der Strecke (ΔX) ermittelt wird, wobei der maximale Abstand (ΔYₘₐₓ) mit einem Schwellwert S2 verglichen wird.

5. Vorrichtung nach Anspruch 4, **dadurch gekennzeichnet, dass** die Auswerte- und Steuereinheit (3) derart ausgebildet ist, eine Übernahme-Aufforderung für den Kraftfahrzeugführer zu generieren, wenn die Schwarmdaten (SD) das vorgegebene Vertrauensmaß unterschritten haben.

6. Vorrichtung nach Anspruch 4 oder 5, **dadurch gekennzeichnet, dass** die Vorrichtung (1) mindestens eine Sensorik zum Erfassen eines Halters einer Lenkhandhabe aufweist, wobei die Auswerte- und Steuereinheit (3) derart ausgebildet ist, ein Warnsignal zu generieren, wenn die Querführung mittels der Schwarmdaten (SD) erfolgt und kein Umgreifen der Lenkhandhabe (10) detektiert wurde.

## Claims

1. A method for at least assisted lateral guidance of a motor vehicle, by means of at least one camera (2), an evaluation and control unit (3) and a set of actuators (4) for implementing steering interventions, wherein the evaluation and control unit (3) determines at least one lane from the data (D) of the camera (2) and generates control commands for the set of actuators (4) depending on the determined lane, wherein the evaluation and control unit (3) additionally takes swarm data (SD) into account, wherein, in driving situations in which insufficient lane recognition by means of the data (D) of the camera (2) exists or is to be expected, the lateral guidance is carried out by means of the swarm data (SD) if the swarm data (SD) have previously exceeded a predetermined confidence level, wherein the confidence level of the swarm data (SD) is determined by at least one comparison of the swarm data (SD) to the data (D) of the at least one camera (2), wherein in each case a curve (Y1, Y2) for a lane boundary is determined on the basis of the data (D) of the at least one camera (2) and of the swarm data (SD) for a given distance (ΔX), wherein the area between the curves (Y1, Y2) is determined and compared to a threshold value S1, and a maximum distance (ΔYₘₐₓ) between the two curves (Y1, Y2) along the distance (ΔX) is determined, wherein the maximum distance (ΔYₘₐₓ) is compared to a threshold value S2.

2. The method according to claim 1, **characterized in that** a takeover prompt is generated for the driver if the swarm data (SD) have fallen below the specified confidence level.

3. The method according to claim 1 or 2, **characterized in that** a holding of a steering handle (10) by the motor vehicle driver is detected, wherein a warning signal is generated if the lateral guidance is carried out by means of the swarm data (SD) and no gripping of the steering handle (10) has been detected.

4. A device (1) for at least assisted lateral guidance of a motor vehicle, comprising at least one camera (2), an evaluation and control unit (3) and a set of actuators (4) for implementing steering interventions, wherein the evaluation and control unit (3) is designed to determine at least one lane from the data (D) of the at least one camera (2) and to generate control commands for the set of actuators (4) depending on the determined lane, wherein the evaluation and control unit (3) additionally takes swarm data (SD) into account, wherein the evaluation and control unit (3) is further designed such that in driving situations in which insufficient lane detection by means of the data (D) of the camera (2) is present or is to be expected, the lateral guidance is carried out by means of the swarm data (SD) if the swarm data (SD) have exceeded a predetermined confidence level, wherein the evaluation and control unit (3) is designed to determine the confidence level of the swarm data (SD) by at least one comparison of the swarm data (SD) to the data (D) of the at least one camera (2), wherein the evaluation and control unit (3) is designed such that a curve (Y1, Y2) for a lane boundary is determined on the basis of the data (D) of the at least one camera (2) and the swarm data (SD) for a predetermined distance (ΔX), wherein the area between the curves (Y1, Y2) is determined during operation and compared to a threshold value S1, and a maximum distance (ΔYₘₐₓ) between the two curves (Y1, Y2) along the distance (ΔX) is determined, wherein the maximum distance (ΔYₘₐₓ) is compared to a threshold value S2.

5. The device according to claim 4, **characterized in that** the evaluation and control unit (3) is designed to generate a takeover prompt for the motor vehicle driver if the swarm data (SD) have fallen below the specified level of confidence.

6. The device according to claim 4 or 5, **characterized in that** the device (1) has at least one sensor system for detecting a holder of a steering handle, wherein the evaluation and control unit (3) is designed to generate a warning signal if the lateral guidance is carried out by means of the swarm data (SD) and no gripping of the steering handle (10) has been detected.

## Revendications

1. Procédé de guidage transversal au moins assisté d'un véhicule automobile, au moyen d'au moins une caméra (2), d'une unité d'évaluation et de commande (3) et d'un système d'actionneurs (4) pour la mise en œuvre d'interventions de direction, dans lequel l'unité d'évaluation et de commande (3) détermine au moins une voie de circulation à partir des données (D) de la caméra (2) et produit des ordres de commande pour le système d'actionneurs (4) en fonction de la voie de circulation déterminée, dans lequel l'unité d'évaluation et de commande (3) tient compte en outre de données en essaim (SD), dans lequel le guidage transversal s'effectue au moyen des données en essaim (SD) dans des situations de conduite dans lesquelles une reconnaissance insuffisante de la voie de circulation au moyen des données (D) de la caméra (2) existe ou est à prévoir, lorsque les données en essaim (SD) ont préalablement dépassé un degré de confiance prédéfini, dans lequel le degré de confiance des données en essaim (SD) est déterminé par au moins une comparaison des données en essaim (SD) avec les données (D) de l'au moins une caméra (2), dans lequel une courbe (Y1, Y2) pour une limitation de voie de circulation est respectivement déterminée à l'aide des données (D) de l'au moins une caméra (2) et des données en essaim (SD) pour un trajet prédéfini (ΔX), dans lequel la surface entre les courbes (Y1, Y2) est déterminée en valeur absolue et comparée à une valeur seuil S1 et une distance maximale (ΔYₘₐₓ) entre les deux courbes (Y1, Y2) est déterminée le long du trajet (ΔX), dans lequel la distance maximale (ΔYₘₐₓ) est comparée à une valeur seuil S2.

2. Procédé selon la revendication 1, **caractérisé en ce qu'**une demande de prise en charge est générée pour le conducteur de véhicule automobile lorsque les données en essaim (SD) sont inférieures au degré de confiance prédéfini.

3. Procédé selon la revendication 1 ou 2, **caractérisé en ce qu'**un maintien d'une manette de direction (10) par le conducteur de véhicule automobile est acquis, dans lequel un signal d'avertissement est généré lorsque le guidage transversal s'effectue au moyen des données en essaim (SD) et qu'aucune saisie de la manette de direction (10) n'a été détectée.

4. Dispositif (1) pour le guidage transversal au moins assisté d'un véhicule automobile, comprenant au moins une caméra (2), une unité d'évaluation et de commande (3) et un système d'actionneurs (4) pour la mise en œuvre d'interventions de direction, dans lequel l'unité d'évaluation et de commande (3) est conçue de manière à déterminer au moins une voie de circulation à partir des données (D) de l'au moins une caméra (2) et à produire des ordres de commande pour le système d'actionneurs (4) en fonction de la voie de circulation déterminée, dans lequel l'unité d'évaluation et de commande (3) tient en outre compte de données en essaim (SD), dans lequel l'unité d'évaluation et de commande (3) est en outre conçue de telle sorte que, dans des situations de conduite dans lesquelles une reconnaissance insuffisante de la voie de circulation au moyen des données (D) de la caméra (2) existe ou est à prévoir, le guidage transversal s'effectue au moyen des données en essaim (SD), lorsque les données en essaim (SD) ont dépassé un degré de confiance prédéfini, dans lequel l'unité d'évaluation et de commande (3) est conçue de manière à déterminer le degré de confiance des données en essaim (SD) par au moins une comparaison des données en essaim (SD) avec les données (D) de l'au moins une caméra (2), dans lequel l'unité d'évaluation et de commande (3) est conçue de manière à déterminer respectivement une courbe (Y1, Y2) pour une limitation de la voie de circulation à l'aide des données (D) de l'au moins une caméra (2) et des données en essaim (SD) pour un trajet prédéfini (ΔX), dans lequel la surface entre les courbes (Y1, Y2) est déterminée de manière opérationnelle et comparée à une valeur seuil S1 et une distance maximale (ΔYₘₐₓ) entre les deux courbes (Y1, Y2) est déterminée le long du trajet (ΔX), dans lequel la distance maximale (ΔYₘₐₓ) est comparée à une valeur seuil S2.

5. Dispositif selon la revendication 4, **caractérisé en ce que** l'unité d'évaluation et de commande (3) est conçue de manière à générer une demande de prise en charge pour le conducteur de véhicule automobile lorsque les données en essaim (SD) sont inférieures au degré de confiance prédéfini.

6. Dispositif selon la revendication 4 ou 5, **caractérisé en ce que** le dispositif (1) présente au moins un système de capteurs pour acquérir un maintien d'une manette de direction, dans lequel l'unité d'évaluation et de commande (3) est conçue de manière à générer un signal d'avertissement lorsque le guidage transversal s'effectue au moyen des données en essaim (SD) et qu'aucune saisie de la manette de direction (10) n'a été détectée.
